Europäisches Patentamt

European Patent Office

Office européen des brevets

(19)

(11) Publication number: **0 311 188**
**A2**

(12) **EUROPEAN PATENT APPLICATION**

(21) Application number: 88202130.6

(22) Date of filing: 29.09.88

(51) Int. Cl.⁴: **H04N 11/00**

(30) Priority: 06.10.87 US 105061

(43) Date of publication of application:
**12.04.89 Bulletin 89/15**

(84) Designated Contracting States:
**DE FR GB**

(71) Applicant: **N.V. Philips' Gloeilampenfabrieken**
**Groenewoudseweg 1**
**NL-5621 BA Eindhoven(NL)**

(72) Inventor: **Prodan, Richard Stephen**
c/o **Int. Octrooibureau B.V. Prof. Holstlaan 6**
**NL-5656 AA Eindhoven(NL)**
Inventor: **Rhodes, Charles W.**
c/o **Int. Octrooibureau B.V. Prof. Holstlaan 6**
**NL-5656 AA Eindhoven(NL)**

(74) Representative: **Steenken, Jacob Eduard et al**
**INTERNATIONAAL OCTROOIBUREAU B.V.**
**Prof. Holstlaan 6**
**NL-5656 AA Eindhoven(NL)**

(54) **System for broadcasting HDTV images over standard television frequency channels.**

(57) Method and apparatus for transmitting and receiving an HDTV signal over standard television bandwidth channels. The system provides for quadrature modulation of the standard NTSC carrier with an augmentation signal containing components of the HDTV signal. The upper sideband portion of the quadrature modulation is suppressed along with the carrier produced from the quadrature modulation. The resulting lower sideband extends into the lower adjacent channel frequency spectrum, and is transmitted along with the standard NTSC video signal. Improved compatibility is achieved with existing NTSC signals by varying on an alternate line basis the phase of the augmentation signal to avoid the consequence of carrier phase shift from DC components in the quadrature modulated signal. A time gated demodulator is provided at the receiver for accurately tracking the phase of the carrier, permitting accurate demodulation of the quadrature augmentation signal. A demodulation circuit is described having phase shift compensation for removing the effects of phase delays incurred during processing of the received broadcast signal.

FIG. I

# SYSTEM FOR BROADCASTING HDTV IMAGES OVER STANDARD TELEVISION FREQUENCY CHANNELS

## Field of Invention

The present invention relates to high definition television (HDTV) transmission systems. Specifically, apparatus and method are disclosed for broadcasting a standard NTSC television signal and augmentation video signal in adjacent standard television channels.

The United States Patent US-A 4,694,338 (PHA 21.323) describes techniques for increasing the resolution of images which are transmitted as video signals over standard broadcast channels. The enhanced image includes a component which can be used to increase the aspect ratio of the displayed image. Along with a transmitted main component, representing a standard NTSC video image, side panel information is transmitted which is suitably joined with the standard NTSC image to provide a wider aspect image for display. Additionally, provisions are made to transmit further horizontal and vertical detail for both the side panels and main image component in the augmentation channel.

The additional information transmitted in HDTV must be compatible with television receivers which are currently used to demodulate the standard NTSC broadcasts. Also, spectrum space must be efficiently used to preserve the interference protection presently afforded by guard bands between locally used channels so that information from one channel does not interfere with other broadcasts of different programs in other localities where these adjacent channel frequencies are used.

One proposed techniques for transmitting additional video image detail is set forth in United States Patent US-A 4,521,803 to Gittinger. This technique transmits an enhanced video image using quadrature modulation. Two horizontal lines of a high resolution picture are scanned and the luminance information of the two lines are added together to amplitude modulate a picture carrier in the standard NTSC format. An additional signal, however, is provided which is formed from the difference between the luminance signals of the scanned lines. This difference signal is used to form a suppressed, double sideband signal which is in phase quadrature with the standard NTSC carrier. The system transmits only the upper sidebands of both the in phase and quadrature phase modulations, limiting the bandwidth to the standard video bandwidth of an NTSC signal. In a second embodiment described in the patent, the in-phase modulation component is permitted to extend into the lower adjacent channel to form an increased bandwidth signal. Synchronous detection at the receiver is proposed to recover both the in-phase and quadrature phase modulated information. The system is proposed as being compatible with television receivers which are not equipped with special demodulation and decoding circuits.

In another quadrature system, the Matsushita Industrial Company has proposed during ICCE 1987 a scheme for quadrature modulation of an NTSC picture carrier. In this system, the lower sideband of both the quadrature and in-phase modulation components are filtered to limit the bandwidth to that of a standard broadcast channel. This system as well is believed to be compatible with existing television receivers, wherein it is assumed that the augmentation video signal, appearing as a quadrature component to the standard NTSC signal, will be transparent to currently used receivers which utilize quasi-synchronous demodulation techniques for recovering the baseband video signal.

## Summary of the invention

It is an object of this invention to provide an improved, quadrature-based HDTV transmission system.

It is a more specific object of this invention to provide a quadrature-based system which has improved compatibility with existing television receivers.

In a first aspect of the present invention, use is made of the lower adjacent channels except in the cases of channels 2, 5, 7, 14 and 38, which are dedicated to non-broadcast services.

Use of this lower adjacent spectrum space is made possible by quadrature modulating the standard carrier for these channels with an augmentation signal which can be used in an appropriately equipped receiver to recreate the HDTV image. The augmentation video signal modulates a carrier signal having the same frequency as the standard NTSC broadcast, but in phase quadrature thereto. The resulting signal is a suppressed carrier double sideband modulated signal. The upper sideband of the quadrature phase carrier double sideband suppressed carrier signal is attenuated, using a filter at the transmitter which attenuates 6 db at the carrier frequency. In the preferred embodiment, this filter has an Nyquist (linear) slope function which slopes from the band edge of the primary channel negatively, and has a negligible loss to the lower sidebands of greater than 1.25 MHz. The filtered quadrature sidebands are linearly combined with the standard NTSC carrier modulated signal.

The lower sideband of the augmentation signal modulated carrier is therefore transmitted in phase quadrature with the standard main channel NTSC signal. Thus, additional bandwidth is provided using the lower adjacent channel and a portion of the assigned channel. The possibility for cross-talk between the main and augmentation channels is lessened by suppressing the upper sideband of the augmentation modulated signal. The net result is an effective bandwidth of substantially 11 MHz for the HDTV transmission.

In a second aspect of the invention for improving the compatibility of HDTV broadcasts with standard NTSC video broadcasts, the effect of any low frequency component at or near DC in the augmentation signal on the carrier phase is lessened. A DC component contained in the quadrature modulated signal which is combined with the standard NTSC modulated signal, will tend to shift the carrier phase which is used at each of the conventional receivers for demodulation. Conventional receivers establish a phase reference with respect to the transmitted carrier signal. Any carrier shift resulting from a DC component contained in the augmentation signal will create an error in demodulating the modulated carrier signal by standard NTSC receivers having quasi-synchronous detectors of the usual kind. The net effect is cross-talk which would enter these standard television receivers due to the presence of the quadrature modulated signal. To remove the effects of this DC component, it is proposed that the phase of the carrier carrying the augmentation signal be reversed 180° on alternate line during transmission of those signal components having a DC component. This will effectively remove the effect of a DC component on the recovered in-phase picture carrier.

In still a further improvement according to the invention, accurate carrier regeneration is provided at the receiver equipped with circuitry for demodulating the quadrature components contained in the HDTV signal. Accurate carrier regeneration is provided by a technique which samples the phase of the carrier during specific time periods, corresponding to a portion of the blanking interval of the video signal. During at least a portion of the horizontal blanking intervals of the standard NTSC video signal, the quadrature components at the transmitter are fully suppressed, providing for an accurate representation of the transmitted carrier phase and frequency. Thus, carrier lock is achieved only during the blanking time when the true phase of the carrier is known. The remaining portion of the horizontal blanking interval may be used for data transmission.

In still a further improvement provided by the invention, the demodulating circuit for detecting the quadrature modulated augmentation signal includes a technique for removing the phase offset incurred during processing of the signal. The present invention provides for a demodulation circuit which will alter the phase of the locally generated carrier to compensate for any phase delays incurred by the intermediate frequency signal during signal processing. Thus, the intermediate frequency signal is accurately demodulated with respect to its phase to accurately recover the baseband augmentation signal.

According to a first broad aspect of the invention, there is provided a method for transmitting an augmentation video signal for increasing the width and information content of a standard picture represented by a standard video signal comprising:
generating a radio frequency carrier signal for a channel of the standard television broadcast spectrum;
modulating said carrier signal with said standard video signal to produce an amplitude modulated carrier signal;
modulating said carrier signal with said augmentation video signal to produce an amplitude modulation component in quadrature with modulation produced by said standard video signal;
suppressing the upper sideband of said quadrature amplitude component, whereby substantially all of said quadrature amplitude components are within a bandwidth allotted to a lower adjacent channel; and,
switching the phase of said quadrature components 180° during alternate lines of said standard video signal, whereby the effects of a DC component in said augmentation signal on the mean phase of said carrier phase is removed.

According to a second broad aspect of the invention, there is provided a method for demodulating an augmentation signal and standard video signal modulated on a carrier signal of a standard broadcast channel, comprising:
generating an intermediate frequency signal from said modulated carrier signal;
generating a local carrier for demodulating said broadcast channel by establishing a phase of a voltage controlled oscillator during a blanking interval of said standard video signal by applying a control voltage proportional to the difference in phase between said voltage controlled oscillator signal and the phase of said intermediate frequency signal, whereby said oscillator assumes a constant phase with respect to said intermediate frequency signal;
compensating said local carrier for phase delays incurred by said intermediate frequency signal comprising:
determining during a horizontal blanking interval of said video signal the difference between the phase of said local carrier and a reference phase voltage; shifting the phase of said local carrier signal in a direction to reduce said difference; and, phase demodulating said intermediate frequency signal with said shifted local carrier signal, whereby said augmentation signal is produced.

According to a third broad aspect of the invention, there is provided a method for transmitting an augmentation video signal for increasing the width and resolution of a standard video signal comprising: generating in phase and quadrature phase components of a carrier signal of a television channel; modulating said in-phase component of said carrier signal with a standard NTSC video signal; modulating said quadrature component of said carrier signal with said augmentation video signal, whereby upper and lower sideband components of said quadrature component are produced; and combining said lower sideband of said quadrature component containing said augmentation video signal with said in-phase modulation components, whereby said modulated carrier signal is produced having a quadrature component in a lower adjacent channel containing said augmentation signal.

According to a fourth broad aspect of the inention, there is provided an apparatus for transmitting an augmentation video signal along with a standard video signal comprising: a carrier generator for generating a carrier signal having in-phase and quadrature phase signal components at a frequency of a standard television channel; modulator means for modulating said in-phase component with said standard video signal and said quadrature phase component with said augmentation video signal; means for suppressing an upper sideband produced by modulating said quadrature component, whereby only a lower sideband produced by modulating said quadrature component remains: and, means operative during a blanking interval of said video signal for suppressing all quadrature related modulation components, whereby only in-phase signal components are produced during said blanking interval.

According to a fifth broad aspect of the invention, there is provided in a system for producing high definition television signals which include a standard video signal transmitted as an upper sideband, and an augmentation video signal, transmitted as a lower sideband of a single carrier frequency, a receiving apparatus for recovering said augmentation video signal comprising: means for converting a received carrier frequency signal containing an upper and lower sideband into an intermediate frequency signal which contains an unmodulated component and in-phase and quadrature phase components; means for generating a local carrier signal having a frequency and phase locked to the frequency and phase of said unmodulated component contained in said intermediate frequency signal; means for phase shifting said local carrier signal to obtain a substantially 90° phase relationship with quadrature modulation components contained in said intermediate frequency signal; and means for phase demodulating said quadrature components using said local carrier.

According to a sixth broad aspect of the invention, there is provided a method for transmitting an augmentation video signal for increasing the width and resolution of a standard video signal comprising: generating in-phase and quadrature phase components of a carrier signal of a television channel; modulating said in-phase component of said carrier signal with a standard NTSC video signal; modulating said quadrature component of said carrier signal with said augmentation video signal, whereby upper and lower sideband components of said quadrature component are produced; combining at least one of said quadrature components containing said augmentation video signal with said in-phase modulation components, whereby said modulated carrier signal is produced having at least one quadrature component containing said augmentation signal; and, alternating the phase of said combined quadrature components 180° on an alternate periodic basis, whereby the effects of a DC component in said augmentation signal on said carrier signal phase are reduced.

Brief description of the Figures

Figure 1 illustrates the frequency spectrum of an HDTV transmission signal in accordance with a preferred embodiment of the invention.

Figures 2A illustrates the amplitude relationship between the carrier, upper and lower sidebands in an IF signal of an NTSC receiver.

Figure 2B illustrates the vectoral relationship between the upper an lower sidebands of the NTSC transmitter signal.

Figure 2C illustrates the effect due to the upper and lower sidebands on an NTSC signal.

Figure 2D illustrates the effect of the quadrature transmitter signal on the phase of the NTSC transmitted carrier, as well as the effect of line sequential alternation of the quadrature signal.

Figure 3A illustrates the intermediate frequency passband frequency response of a standard NTSC television receiver.

Figure 3B illustrates the frequency response of the passband filter for the quadrature components of the quadrature generated signal of Figure 1.

Figure 4A illustrates a standard NTSC video line signal.

Figure 4b illustrates the augmentation signal amplitude versus time with respect to the standard NTSC video signal.

Figure 5 illustrates a transmitting apparatus for transmitting the signal whose frequency spectrum is shown in Figure 1.

Figure 6 demonstrates a receiver carrier regeneration circuit and NTSC demodulator for recovering the NTSC signal whose spectrum is shown in Figure 1.

Figure 7 illustrates a carrier demodulator for the quadrature component of the signal whose frequency spectrum is shown in Figure 1.

Figure 8 is a timing diagram illustrating the timing pulses derived from the NTSC signal for enabling the gate elements of Figures 6 and 7.


Description of the Preferred Embodiment


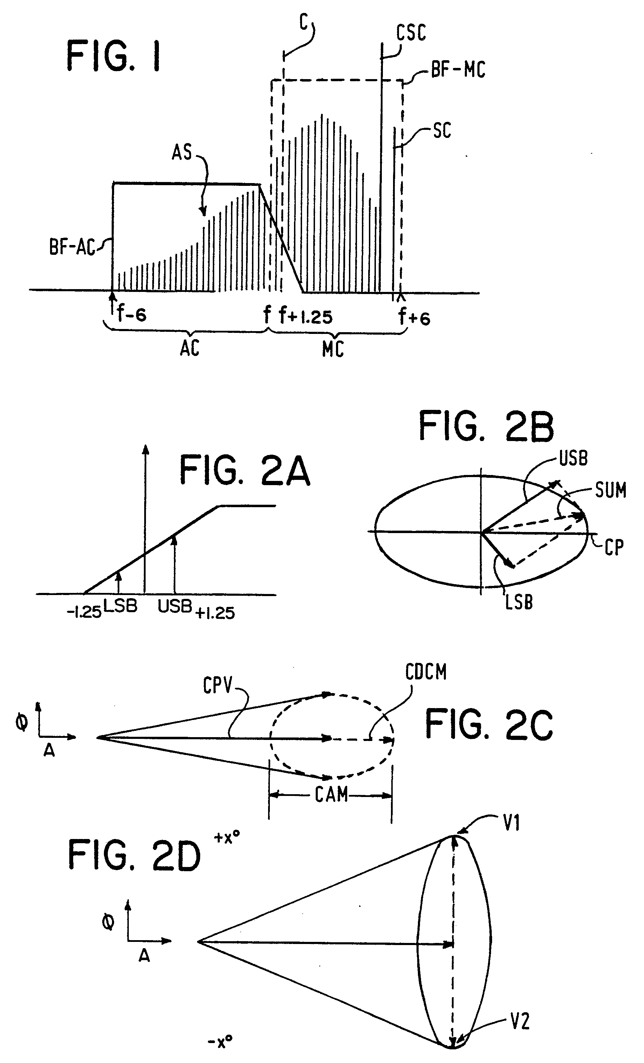

Referring now to Figure 1, there is shown an amplitude versus frequency spectrum plot of a broadcast signal produced in accordance with the present invention. The spectrum includes a standard NTSC modulated signal in an upper channel, referred to in the following as the main channel MC. The carrier C is located at 1.25 MHz above the lower band edge for this channel. The main channel MC occupies a bandwidth of 6 MHz, as shown by its bandwidth function BF-MC. The standard color subcarrier CSC and sound carrier SC are shown within the main channel containing the standard NTSC broadcast spectrum.

The additional information transmitted in HDTV must not interfere with the operation of NTSC receivers presently serving the public. As the radio frequency spectrum is a valuable public resource, the amount of additional spectrum required for HDTV should be held to a minimum. One possibility of meeting these requirements is to transmit the additional information in the lower adjacent TV channel AC as those frequencies are not used for broadcasting in the same or nearby communities, and presently serve in a guardband locally. Use of these fequencies as other programming channels, if possible, would increase the efficiency of the spectrum utilization, however, new and novel modulation techniques would be required to permit continued operation of NTSC receivers in these communities.

Additional to the standard NTSC broadcast spectrum, there is shown an augmentation signal spectrum AS which comprises a frequency spectrum extending into the lower adjacent channel AC. The amplitude of the spectrum, indicated by its bandwith function BF-AC, is generally limited to be 10 dB below the broadcast carrier level. The additional augmentation signal sideband is in phase quadrature to the carrier, and to the main channel sideband information.

Modulating a carrier signal having the same frequency as the standard broadcast signal but in phase quadrature thereto with the augmentation signal produces a set of sidebands symmetrical with the broadcast carrier. These augmentation signal sidebands and their suppressed quadrature carrier are filtered so that most of the upper sideband energy is suppressed at 1.25 MHz above the picture carrier, the picture carrier is attenuated 6 db and the spectrum 1.25 MHz below the carrier is not attenuated.

The filter function from the upper band edge of the lower adjacent channel and main channel decreases linearly with frequency. The picture carrier frequency is attenuated 6 dB. The filter slope remains linear up to the stop band which is 1.25 MHz above the carrier frequency. A second stop band exists at the lower bandwith edge of the lower adjacent channel. The frequency spectrum produced from the augmentation signal is therefore confined to its lower sideband having most of its energy below the carrier frequency. Only a small portion of the upper sideband energy remains in the frequency spectrum between the carrier frequency and 1.25 MHz above the carrier frequency.

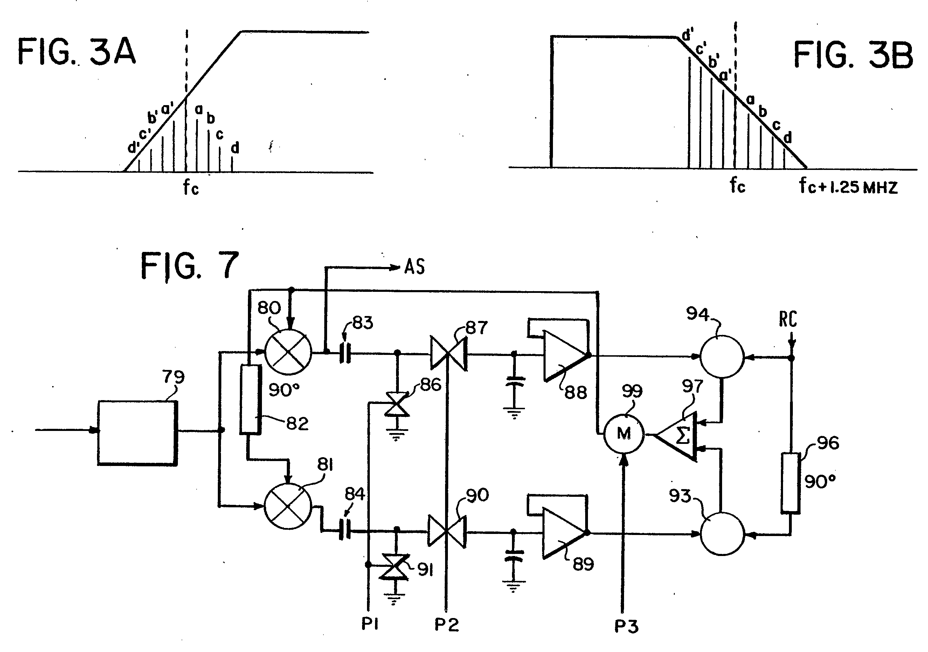

The Nyquist filter amplitude response is generally shown in Figure 3B. Figure 3B illustrates a Nyquist response which has a negatively decreasing function which is linear, beginning at the band edge between the upper and lower channels. The amplitude further at the carrier frequency is 6 dB attenuated from the band edge amplitude level. The standard NTSC television receiver generally has an IF signal passband as is shown in Figure 3A. The frequency amplitude function in the region of the carrier or corresponding intermediate frequency signal, is shown to be generally complementary to that of Figure 3B. As can be seen in Figure 3A, the lower sidebands of the intermediate frequency signals are subject to an attenuation which is greater than those of the upper sideband. The IF signal passband of Figure 3A will include a quadrature component representing the augmentation signal having an upper and lower sideband which are substantially equal. It is necessary to filter the quadrature RF signal according to Figure 3B before transmitting the same in order to produce symmetrical quadrature sidebands for the received quadrature signal after filtering by the intermediate frequency signal passband filter. Quasi-synchronous and true synchronous detectors will reject the present quadrature signal sidebands which appear with the in-phase NTSC IF signal sidebands.

Television receivers employed envelope detection of the intermediate frequency picture signal before the development of quasi-synchronous video detector integrated circuits some twelve years ago.

The quasi-synchronous videodetector differs from an envelope detector in that it synchronously detects the modulation by regenerating the carrier frequency (at IF) and it is this regenerated carrier which controls the conduction of the detecting means. The bandwidth of this carrier regeneration circuit is typically a few hundred kilohertz, although it could be made arbitrarily smaller. Quasi-synchronous video detectors are now in use in North America. True sychronous video detectors have much smaller bandwidth in their carrier recovery circuit. It is expected that any present usage of envelope detection will soon end due to the economic advantages of the newer detection process.

Compatibility of the proposed scheme with NTCS receivers is therefore compatibility with receivers having quasi-synchronous video detectors, and not those few older receivers still in service having envelope detectors. It is thought that such receivers will be out of service by the time a new system of broadcasting can be implemented.

The carrier regeneration process in quasi-synchronous detectors must provide a carrier signal to the detection means at the correct phase to demodulate the wanted information. This means in the case of NTSC receivers, the carrier must be in-phase with the NTSC component, and would therefore be in quadrature with the additional signal transmitted on the same carrier frequency for HDTV.

The augmentation information, which is in phase quadrature with the standard NTSC video signal, is compatible with existing television receiving sets having quasi-synchronous video demodulator circuits. No additional carrier component is transmitted. The augmentation signal is produced by a balanced modulator which fully suppresses the carrier. Most of the upper sideband is suppressed as well. The resulting lower sideband is combined linearly with the standard NTSC broadcast signal to provide the spectrum of Figure 1. Standard television receivers equipped with quasi-synchronous demodulation detectors will not detect the additional quadrature component containing the augmentation signal. Only a very low level of power is introduced into the lower adjacent channel spectrum by the higher order lower sidebands, and will not constitute interference with other stations in adjacent localities. Power in the sidebands contained from augmentation signal modulation of the carrier decreases rapidly as the frequency separation from the carrier increases, thus reducing the potential interference into a signal broadcast in the lower adjacent channel.

The picture signal according to NTSC standards modulates the carrier approximately 58% depth of modulation, white being 12 1/2% and black 75%.

The quadrature signal being transmitted uses balanced modulation with zero amplitude at 50 IRE scale units (mid-gray) and 29% carrier representing both black and white (but with opposite phase). Furthermore, the highest amplitude sidebands produced by the modulation process are attenuated at the transmitter by 6 dB. Taking these factors into account, it is seen that the power radiated in the lower adjacent channel (for equal signal-to-noise ratios) is small and is generally a function of the modulating video signal. It should also be noted that there is no aural carrier radiated in the lower channel.

Further reduction in possible interference with reception of the broadcasts on the lower adjacent channel in distant cities can be obtained by means of improved antenna directivety, where the HDTV signal is broadcast with circular polarization. In such cases, a circularly polarized receiving antenna can further attenuate the unwanted lower sideband of the HDTV transmission.

Referring to Figure 2A, the frequencies and amplitudes of both sidebands of a vestigial sideband signal at the output of the IF filter in the receiver is shown. This represents the case for baseband frequencies below 1.25 MHz which amplitude modulate the picture carrier in a standard NTSC signal. The frequency above the carrier in the upper sideband is denoted USB, and the frequency below the carrier in the lower sideband is denoted LSB.

The phase relationship of these frequencies USB and LSB with respect to the picture carrier phase CP defined by the horizontal axis is shown in Figure 2B. The carrier phase CP remains stationary, while the phase vector USB rotates counterclockwise and the phase vector LSB rotates clockwise at an angular velocity determined by the frequency separation between the sideband components and the carrier frequency. The sum of these components is shown by the vector SUM which is a phase vector rotating at the same angular frequency, but whose amplitude traces out the elliptical path shown.

For a standard NTSC signal, the vector SUM of Figure 2B is added to the carrier phase vector CPV as shown in Figure 2C. The carrier amplitude and phase as a function of time lies on the elliptical path shown. The carrier CDCM for DC modulation is shown by the dashed vector which lies on the carrier phase axis with no phase offset at any time. Note that for frequencies above DC, the amplitude modulation CAM is large (major axis of ellipse) while the phase modulation is small (minor axis of ellipse). Thus, an essentially constant phase amplitude modulated signal is produced.

The quadrature phase, suppressed carrier signal produces a similar pair of inequal amplitude sidebands which is the mirror image of those shown in Figures 2A and 2B, with the carrier phase shifted 90° with respect to the NTSC main channel picture carrier. Thus, Figure 2B is rotated 90° to represent the locus of all phases of the quadrature modulation signal with respect to the main channel carrier. The resultant carrier amplitude and phase for the picture carrier with quadrature vestigial sideband modulation is shown in Figure 2D. The carrier for DC modulation in the quadrature channel is shown by the dashed vectors which lie perpendicular to the carrier phase axis. The upper dashed vector V1 represents the DC induced phase component of the quadrature signal. The bottom dashed vector V2 illustrates the effect of shifting the quadrature added components 180°. The net result is an average phase which has not changed. Thus, a constant phase error of the resultant main channel picture carrier is produced.

The constant phase of the resultant main channel picture carrier and a quadrature modulation signal with a 180° phase inversion of the quadrature suppressed carrier is also shown in Figure 2D. The same phase error magnitude results, but in the opposite angular direction from the main channel in-phase picture carrier.

In order to avoid the shift in carrier phase which would accompany a DC component contained in the quadrature component, the present invention proposes to switch the carrier phase quadrature added component 180° on alternate lines of the video signal. Thus, the average carrier phase error due to any DC component would be effectively average to zero. As is shown in Figure 2D, switching the lower sideband quadrature component 180° tends to pull the carrier phase in an opposite sense during alternate lines of video augmentation signal. The average phase for the carrier, when switching the quadrature added component 180° is therefore substantially zero. By providing for alternate line phase inversion of the quadrature added component, the effects of DC components contained in the augmentation signal sideband on carrier phase are minimized. Standard television receivers equipped with quasi-synchronous detectors will therefore see an accurate carrier phase with which to generate the necessary reference signal for demodulating the standard NTSC upper sideband components.

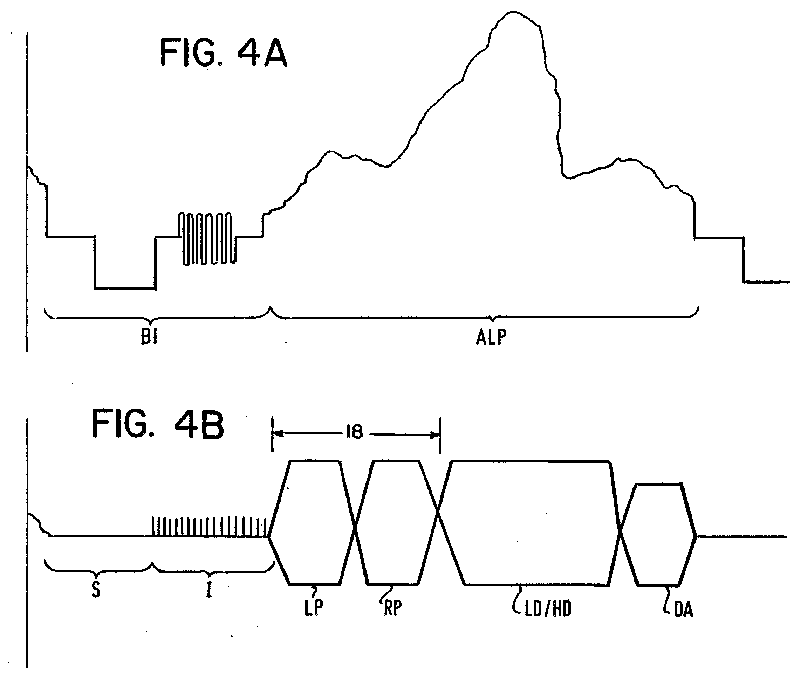

Turning now to Figures 4A and 4B, there is shown one line of a standard NTSC video signal amplitude versus time function, and a line of augmentation video signals. The familiar blanking interval BI containing a sync pulse and colorburst are shown, followed by an active line portion ALP of 52 microseconds. During the active line portion ALP, the luminance information for display on the CRT screen is used to modulate the beam intensity of a cathode ray tube. Additionally, an augmentation signal is transmitted and received at the same time, containing left panel LP, right panel RP, LD/HD and digital audio DA information. The left and right panels are, of course, the remaining video information comprising the additional width for a wide aspect picture. The additional width information is contained in 18 microseconds per line interval and can be joined to a standard NTSC video frame to provide a wider aspect ratio picture. Additionally, vertical and horizontal resolution components are transmitted as LD and HD components, followed by a digital audio signal DA which can be used with the standard NTSC audio signal to provide improved sound quality for television, including stereophony.

The present invention may provide for a suppression of all quadrature components contained in the spectrum of Figures 1 and 2 during at least a portion S of the blanking interval of each NTSC video signal. It is also possible to transmit information I during the remaining portion of horizontal blanking intervals using the quadrature channel, provided that the information is bandpass limited between 1.25 and 7.25 MHz and its mean value is 50 IRE, at which level the modulator 33 output is zero. Thus, except for such data signals, during blanking the only transmitted signal is an NTSC standard video signal having an in-phase carrier and in-phase sideband components. This interval is advantageously used in a preferred embodiment of the invention to generate an accurate carrier regeneration at the receiver since the true phase of the carrier is known when quadrature components to which the NTSC channel may be responsive, that is, components below 1.25 MHz at baseband are fully suppressed. The lower sideband of the quadrature signal may convey information at frequencies above the effective bandwidth of the carrier recovery circuitry during the horizontal blanking period without any adverse effect upon the accuracy of the carrier recovered. Additionally, during the left panel and right panel time, and during transmission of any component having a DC component, the effect of the DC component is avoided by switching the phase of the quadrature components on an alternate line basis 180° for the quadrature modulated augmentation signal.

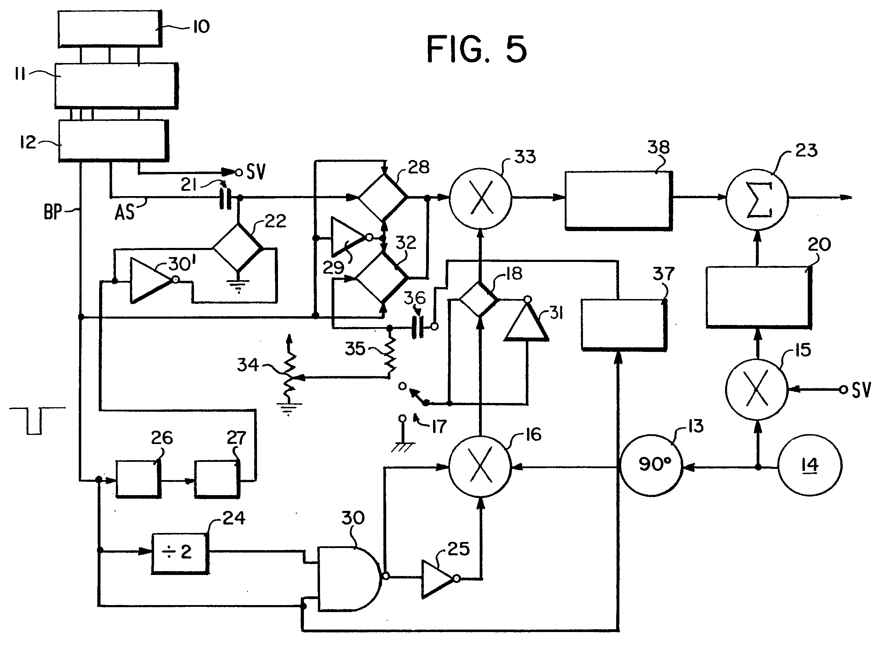

Having generally described the nature of the signal which is produced in accordance with the transmission system of the present invention, reference may be made to Figure 5 which illustrates a technique for generating the signals of Figures 1 and 2. An HDTV source 10 is shown, connected to a transcoder 11. The HDTV source 10 may produce an 1125 line, 60 field per second, 2 to 1 interlaced studio standard television signal. Transcoder 11 would convert the HDTV source signal 10 to that required by encoder 12. The encoder 12 will receive R, G, B inputs of 525 lines per picture, progressive scan. The non- interlaced video information provides a picture at 59.94 fields per second, with an aspect ratio of 16 to 9.

The encoder 12 also provides horizontal blanking pulses BP identifying the horizontal blanking time for each line of video signal being transmitted. The horizontal blanking pulses occur at the 525 line rate, synchronized with the NTSC signal produced by encoder 12.

One of the outputs of the encoder 12 is a standard NTSC video signal SV of Figure 4A, which is applied to a modulator 15. A sideband filter 20 suppresses the lower sideband of the NTSC modulated carrier signal supplied by carrier generator 14. The resulting signal from sideband filter 20 lies within the allocated bandwidth of a main NTSC channel containing standard NTSC video program information.

The augmentation signal AS supplied from the encoder 12 which may be in the format of Figure 4B is AC coupled through a capacitor 21. Gate 22 will DC-restore the video signal during a portion of the blanking interval. During this portion of the blanking interval, established by monostable multivibrators 26 and 27, or other suitable timing means, the capacitor 21 is briefly connected to ground level, providing DC restoration of the augmentation video signal AS. This DC restoration time occurs for a pulse width of approximately 3 microseconds, as established by the monostable multivibrator 27. Multivibrator 27 is triggered after a delay of 1 microsecond generated by monostable multivibrator 26. Monostable multivibrator 26 is in turn triggered by the leading edge of the horizontal blanking interval which is synchronized with signals from the encoder 12. The resulting clamping action provides for a DC voltage level of zero volts to the input of transmission gate 28. This corresponds to the black video level, 0 IRE units in the standard IRE scale, where white is 100 IRE and mid-gray is 50 IRE. During the active line time, which occurs between horizontal blanking intervals, the active video signal is fed through transmission gate 28 to the input of balanced modulator 33. During the blanking time, however, transmission gate 28 is non-conductive by virtue of its control inputs being connected to the horizontal blanking pulse.

Additionally, during the horizontal blanking time for the video signal, transmission gate 32 is operative so that modulator 33 is fed with a reference level, established by potentiometer 34 to establish a 50 IRE video signal level for application to the balanced modulator input 33. This constitutes a bias level for modulator 33 so that during blanking, the modulator output is fully suppressed. During the active line portion, between blanking intervals, video levels above 50 IRE produce an output in phase with the input carrier signal, whereas video levels below 50 IRE produce an output phase shifted 180° from the input carrier signal phase.

If it is desired to transmit data during the horizontal blanking interval, said data signal may be coupled by capacitor 36 and resistance 35 to gate 32 from the data source 37. Said data spectrum must lie in the frequency range above 1.25 MHz and below 7.25 MHz.

Digital data must be channel coded so that below 1.25 MHz there is no significant spectral component. Such a component, if present, would cause a phase error in quasi-synchronous NTSC receivers. The data must be confined in a fixed portion of the horizontal blanking interval. The remaining portion of the horizontal blanking interval is left free of any quadrature signal to permit a phase calibration interval for the augmentation signal demodulated at the users receiver. This data transmission portion of the blanking interval is achieved by synchronizing the data stream produced by data source 37. The data source 37 may be configured to produce a data stream in the later portion of the horizontal blanking inteval, leaving the earlier portion free for calibration purposes. Biphase of Manchester coding of the data would provide the necessary spectral shaping.

The input carrier signal phase is controlled by a doubly balanced modulator 16 connected through an input terminal to a phase shifter 13. Phase shifter 13 will provide a 90° phase shifted carrier, constituting a quadrature carrier having the same frequency as the standard NTSC signal produced by modulator 15. This quadrature related carrier signal is applied through modulator 16 and gate 18 as an RF input signal to modulator 33.

The phase of the output of doubly balanced modulator 16 is controlled by a switching signal applied from a divider 24 and NAND gate 30 to an inverter 25. During the active portion of even numbered video lines, the output signal of modulator 16 is in phase with its input. This also results during horizontal blanking intervals. During the active portion of odd numbered video lines, the output of doubly balanced modulator 16 is 180° out of phase with its input. The alternate line phase shifted carrier signal is received by transmission gate 18. Means 18 may be operationally convenient to assist in checking for carriersuppression by disabling said means manually through switch 17 and noting whether there is any change in carrier power during blanking. The quadrature modulated carrier signal produces by modulator 33 is applied to a Nyquist sideband filter 28. Sideband filter 38 is selected to suppress the upper sideband set produced by modulator 33, leaving the lower sideband set which resides in the lower adjacent channel. This filter 38 attenuates the upper sideband frequencies produced by the augmentation signal AS. The filter has an amplitude response, as is shown in Figure 3B. The filter response is selected so that virtually all upper sideband components which lie 1.25 MHz above the carrier frequency are eliminated. The Nyquist filter function permits quadrature-produced modulation components below the band edge frequency to pass with negligible attenuation. The filter characteristic for the Nyquist filter is selected to have a linear decreasing slope, beginning at the band edge between upper and lower adjacent television channels. The filter response at the picture carrier frequency is 6 dB down from the band edge. The other stop band for filter 38 is at the lower band edge of the lower adjacent channel.

The filtered quadrature sideband signal is combined in signal combiner 23 to produce the composite RF video signal spectrum as is shown in Figure 1. This, of course, may be applied to a frequency converter to up or down convert the signal to the desired broadcast channel frequency.

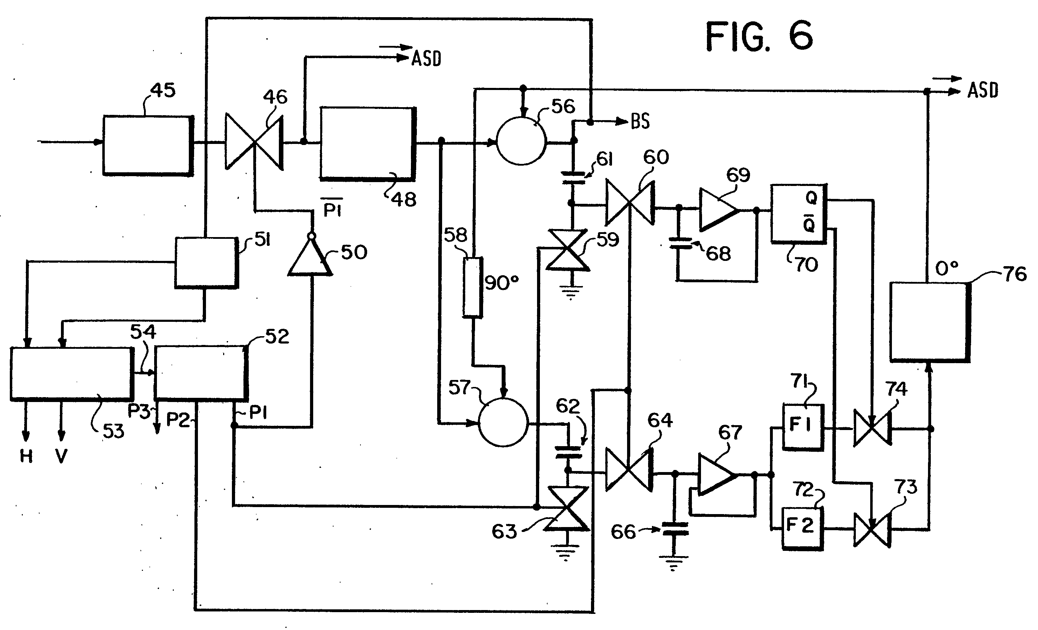

Having thus described the nature of the signal, and a technique for generating the signal for transmitting the HDTV signal in accordance with the invention, a receiving apparatus suitable for demodulating the transmitted signal will be described with respect to Figure 6.

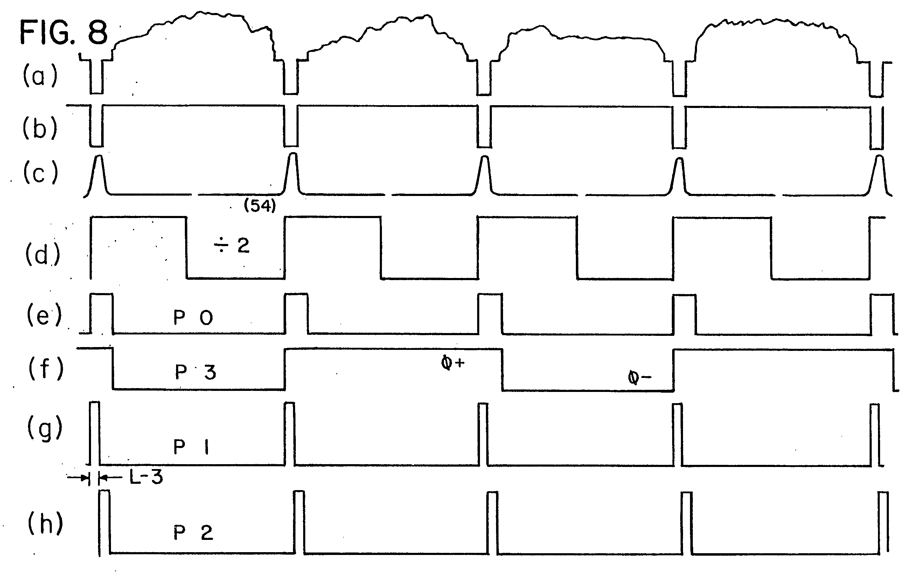

Referring now to Figure 6, there is shown a receiving circuit for demodulating the NTSC video signal. The circuit of Figure 6 includes a carrier regeneration circuit which provides a local carrier signal at the nominal picture IF frequency, which is in phase with the transmitted NTSC carrier signal. The output of the carrier regeneration circuit is applied to an augmentation signal demodulator ASD shown in Figure 7. The carrier regeneration circuit of Figure 6 is a phase locked loop having a voltage controlled oscillator 76. The loop is responsive to an error signal from DC to a cut-off frequency determined by low pass filter 71 or 72. In order to avoid the consequences of a significant DC component as a result of the quadrature modulating signal, a time gated frequency control is implemented.

The intermediate frequency signal produced by a television receiver equipped to receive HDTV broadcasts is applied to a first intermediate frequency amplifying stage 45. This amplified intermediate frequency signal is applied to gate 46. Gate 46 is conductive during the latter portion of the horizontal blanking interval, as well as during the active line time. The gated intermediate frequency signal is applied to the Nyquist filter 48 having the general frequency characteristic shown in Figure 3A, and to the augmentation signal demodulator ASD of Figure 7.

The gated intermediate frequency signal is known to have a true phase during the horizontal blanking interval with respect to the transmitted NTSC carrier and upper sideband. Product detectors 56 and 57 will demodulate the intermediate frequency signal using the local carrier generated from voltage controlled oscillator VCO 76. The phase shift 90° is introduced between the referecce inputs of each product detector 56 and 57 to provide an in-phase component corresponding to the NTSC baseband signal BS, and a quadrature phase component which provides the error signal for the voltage controlled oscillator 76.

The control voltage for the voltage controlled oscillator 76 is applied through two gates 73 and 74. Gate 74 is operative when the voltage controlled oscillator 76 is determined to be in carrier phase synchronization with the transmitted NTSC signal components. Gate 73 is operative during acquisition of the phase synchronization between voltage controlled oscillator 76 and the NTSC carrier signal. During a carrier acquisition stage, the filter 72, having a wider bandwidth than that of 71, will permit the phase locked loop sufficient bandwidth to locate and lock to the transmitted NTSC picture carrier.

Control over the bandwidth or the phase locked loop structure of Figure 6 is implemented by sampling the NTSC baseband signal and integrating the samples. As the level of this signal increases to a threshold for flip flop 70, the flip flop will be operative to switch transmission gates 73 to an OFF condition, and 74 to an ON condition, wherein the narrower filter 71 feeds a control voltage to voltage controlled oscillator 76. Sampling of the NTSC baseband demodulated signal is accomplished as will be evident with respect to Figure 8, only during the interval corresponding to the second portion of the blanking interval for the standard NTSC video signal. As was explained with respect to Figures 3A and 3B, the NTSC carrier transmitted during the horizontal blanking interval is free of any quadrature components greater than 1.25 MHz. Additionally, the NTSC carrier signal is at its maximum amplitude during the horizontal blanking interval while any noise is constant in amplitude. Thus, it is possible for the carrier regeneration circuit of Figure 6 to lock and establish the true carrier phase at this time with ample signal amplitude to correctly synchronize. During the remaining portion of the video signal, gates 60 and 64 are disabled so that the VCO 76 remains locked at a carrier phase determined during the latter portion of each horizontal blanking interval.

The error voltages obtained during this sampling time are stored on capacitors 66 and 68. Amplifiers 67 and 69 provide a buffer function for these stored voltages.

Video signals coupled through capacitors 61 and 62 are DC restored by gates 59 and 63 during the first portion of the blanking interval.

Referring to Figure 8, the various signals necessary to provide DC restoration and sampling are shown. These signals are derived from the NTSC video signal (waveform a) produced from the NTSC sychronous video detector 56. A sync separator 51 will provide the horizontal sync show in waveform b of Figure 8, as well as a vertical synchronization pulse. Deflection circuitry 53, in the conventional manner, will produce horizontal deflection pulses (waveform c) at twice the horizontal sync pulse interval rate and synchronized thereto. As the HDTV system operates on a scan rate twice the conventional NTSC scan rate, horizontal deflection pulses necessarily are at this enhanced scanning rate.

A pulse generator 52 operates from the horizontal deflection pulses 54. Pulse generator 52 will divide the horizontal deflection rate (54) by two as shown in waveform d of Figure 8. The divided horizontal deflection pulse rate is used to generate a waveform e which represents the period of the NTSC horizontal blanking interval which occurs between the leading sync pulse edge, and end of blanking interval. These pulses have been designated PO. Additionally, a gate time P3 is generated which occurs between the leading edge of the horizontal synchronization pulse and the end of horizontal blanking time. As can be seen from waveform f, this occurs at an alternate rate, corresponding to the even fields of the video signal. Thus, it is possible to accurately. mark that portion of the video signal having the alternate line phase reversal using P3, as described with respect to Figure 4B. $\phi$ indicates non-inverted phase and $\bar{\phi}$ indicates inverted phase.

Waveforms g and h of Figure 8 illustrate pulses P1 and P2, identifying that portion of the blanking interval measured between the leading edge of the sync pulse and midway through the blanking interval. P2 illustrates a pulse which begins at the trailing edge of P1 and ending when the horizontal blanking period ends.

These pulses, as applied to those gates shown in Figure 6, permit the IF signal to pass through gate 46 during the NTSC video signal time, excluding that occupied by pulse P1. Additionally, gates 59 and 63 provide DC restoration during P1. The remaining portion of the horizontal blanking interval, as identified by pulse P2 will provide for a sampling of the NTSC in-phase and quadrature phase components via product detectors 56 and 57. The quadrature component is used to form a phase control voltage for VCO 76, while the in-phase component (the NTSC video signal) is also integrated and used to control the bandwidth of the phase locked loop formed from voltage control oscillator 76 and product detector 57.

Having thus illustrated how a local carrier regeneration is accomplished in a receiving apparatus for HDTV television receivers, reference may be had to Figure 7 wherein a demodulator for the quadrature augmentation signal is shown. The quadrature augmentation signal is also demodulated using synchronous detection techniques. However, the quadrature augmentation signal component contained in the baseband IF signal will suffer phase delays due to signal processing in the IF stages of the receiving apparatus. It is therefore required to adjust the reference carrier used for demodulating the quadrature augmentation signal so that it represents the true phase of the original carrier signal transmitted by the apparatus of Figure 5.

The circuitry of Figure 7 first includes an IF filter 79 which has an upper stop band approximately 1.25 megacycles above the carrier. The lower stop band for the signal filter 79 is located at the lower edge of the lower adjacent channel. The filtered signal is applied to first and second product detectors 80 and 81. Each of these product detectors are fed with a reference signal to demodulate a component of the augmentation signal contained in the IF signal.

The reference carrier frequency use for this demodulation is obtained from the VCO 76 of Figure 6. The reference carrier is accurately adjusted in phase by using amplitude modulators 93 and 94. These modulators will function as an attenuator unit, combining a quadrature component from phase shifter 96 with an in-phase component of the reference carrier, RC. By adjusting the relative levels of the signals produced by modulators 93 and 94, it is possible to adjust the phase of the resulting reference carrier signal RC. A summing network 97 will combine the outputs of modulators 93 and 94 to provide the reference carrier having a phase selected in accordance with the relative signal magnitudes from each of the modulators 93 and 94. The resulting reference signal is supplied to a balanced modulator 99 which will be under control of pulse P3 of Figure 8, thereby providing alternate line phase reversal of the carrier reference signal to each product detector 80 and 81.

The adjustment of the phase for the reference carrier is carried out during the interval defined by pulse P2 of Figure 8. During the portion of the horizontal blanking interval, identified by P1 of Figure 8 occurring between the leading edge of the sync pulse and within 3 microseconds (indicated by L-3) thereafter, DC restoration is provided by gates 86 and 91 for video signals coupled through capacitors 83 and 84. The following portion of the blanking interval as identified by pulse P2 will sample the outputs from each of the product detectors 80 and 81. The sampled outputs are applied to integrating circuits 88 and 89. As will be recalled from discussions of Figures 3A and 3B, the phase of the received carrier signal during the second portion of the blanking interval identified by P2 is that of the NTSC carrier, as all quadrature components less than 1.25 MHz are suppressed. Thus, the true phase of the received carrier signal, after conversion to the IF signal and being filtered through the IF filter 79 is represented by the outputs of product detectors 81 and 80. The proper carrier phase for recovering the quadrature modulated signal is 90° from the NTSC signal. Using this relationship, the NTSC signal can be shifted 90° to generate the required reference signal.

The portion of the blanking interval, P2, contains no quadrature signal components below 1.25 MHz. Components above 1.25 MHz are outside the bandwidth required of the phase controlled circuit, and produce no detectable phase error. The voltages derived during this interval of time having been integrated by integrators 88 and 89 are applied to control the signal levels for balanced modulators 93 and 94 in a magnitude such as to reduce the total phase error produced by product detectors 80 and 81. P3 will control phase switching of modulator 99. Thus, accurate phase regeneration for product detectors 80 and 81 is achieved during that portion of the blanking interval during which the phase is accurately known. P3 will switch the phase of the reference signal to product detectors 80, 81 during the active line portion of odd lines providing reinversion of odd line periods.

Thus, there has been described a receiving apparatus for regenerating a local carrier signal, as well as for demodulating the quadrature augmentation signal contained in the HDTV broadcast. Those skilled in the art will recognize yet other variations and embodiments of these techniques for implementing the invention.

## Claims

1. A method for transmitting an augmentation video signal for increasing the width and information content of a standard picture represented by a standard video signal comprising:
generating a radio frequency carrier signal for a channel of the standard television broadcast spectrum;
modulating said carrier signal with said standard video signal to produce an amplitude modulated carrier signal;
modulating said carrier signal with said augmentation video signal to produce an amplitude modulation component in quadrature with modulation produced by said standard video signal;
suppressing the upper sideband of said quadrature amplitude component, whereby substantially all of said quadrature amplitude components are within a bandwidth allotted to a lower adjacent channel; and,
switching the phase of said quadrature components 180° during alternate lines of said standard video signal, whereby the effects of a DC component in said augmentation signal on the mean phase of said carrier phase is removed.

2. The method of claim 1 wherein said carrier signal is phase reversed only during portions of said augmentation signal which contain a DC level.

3. The method of claim 1 further comprising filtering said augmentation signal so that the amplitude of said lower sideband containing said augmentation signal components decreases near said carrier frequency as a substantially linear function.

4. The method of claim 1 further comprising suppressing said quadrature component bearing said augmention video signal during said horizontal blanking period.

5. A method for demodulating an augmentation signal and standard video signal modulated on a carrier signal of a standard broadcast channel, comprising:
generating an intermediate frequency signal from said modulated carrier signal;
generating a local carrier for demodulating said broadcast channel by establishing a phase of a voltage controlled oscillator during a blanking interval of said standard video signal by applying a control voltage proportional to the difference in phase between said voltage controlled oscillator signal and the phase of said intermediate frequency signal, whereby said oscillator assumes a constant phase with respect to said intermediate frequency signal;
compensating said local carrier for phase delays incurred by said intermediate frequency signal comprising:
determining during a horizontal blanking interval of said video signal the difference between the phase of said local carrier and a reference phase voltage;

shifting the phase of said local carrier signal in a direction to reduce said difference; and,

phase demodulating said intermediate frequency signal with said shifted local carrier signal, whereby said augmentation signal is produced.

6. The method of claim 5 wherein said reference phase voltage is the intermediate frequency signal during said horizontal blanking period.

7. The method of claim 5 further comprising alternately phase shifting said local carrier signal 180°.

8. The method of claim 5 further comprising holding the phase of said local carrier signal constant between blanking intervals.

9. A method for transmitting an augmentation video signal for increasing the width and resolution of a standard video signal comprising:

generating in phase and quadrature phase components of a carrier signal of a television channel;

modulating said in-phase component of said carrier signal with a standard NTSC video signal;

modulating said quadrature component of said carrier signal with said augmentation video signal, whereby upper and lower sideband components of said quadrature component are produced; and

combining said lower sideband of said quadrature component containing said augmentation video signal with said in-phase modulation components, whereby said modulated carrier signal is produced having a quadrature component in a lower adjacent channel containing said augmentation signal.

10. The method of claim 9 further comprising suppressing said quadrature carrier component as well as said upper sideband component produced by said augmentation signal.

11. The method of claim 9 further comprising suppressing changes in the mean phase of said quadrature signal produced by a DC component contained in said augmentation signal.

12. The method of claim 9 wherein said upper sideband is suppressed using a filter having a reverse Nyquist response.

13. The method of claim 12 wherein said filter has an amplitude versus frequency response which decreases linearly beginning at a frequency at an upper edge of said lower adjacent channel.

14. An apparatus for transmitting an augmentation video signal along with a standard video signal comprising:

a carrier generator for generating a carrier signal having in-phase and quadrature phase signal components at a frequency of a standard television channel;

modulator means for modulating said in-phase component with said standard video signal and said quadrature phase component with said augmentation video signal;

means for suppressing an upper sideband produced by modulating said quadrature component, whereby only a lower sideband produced by modulating said quadrature component remains: and,

means operative during a blanking interval of said video signal for suppressing all quadrature related modulation components, whereby only in-phase signal components are produced during said blanking interval.

15. The apparatus for transmitting according to claim 14, further comprising means for alternately switching the phase of said quadrature components, whereby the quadrature signal for adjacent video lines have opposite phases.

16. The apparatus of claim 14 wherein said means for suppressing said upper sideband is a reverse Nyquist filter having a linearly decreasing amplitude versus frequency response in the vicinity of said carrier signal frequency.

17. The apparatus of claim 14 comprising means for suppressing an unmodulated quadrature component whereby only a remaining lower sideband quadrature remains.

18. The apparatus of claim 15, wherein said in-phase and quadrature components are alternately switched only during portions of said augmentation signal.

19. The apparatus of claim 16 wherein said reverse Nyquist filter linearly decreasing amplitude versus frequency response begins at a frequency which substantially coincides with said television channel lower edge.

20. In a system for producing high definition television signals which include a standard video signal transmitted as an upper sideband, and an augmentation video signal, transmitted as a lower sideband of a single carrier frequency, a receiving apparatus for recovering said augmentation video signal comprising:

means for converting a received carrier frequency signal containing an upper and lower sideband into an intermediate frequency signal which contains an unmodulated component and in-phase and quadrature phase components;

means for generating a local carrier signal having a frequency and phase locked to the frequency and phase of said unmodulated component contained in said intermediate frequency signal;

means for phase shifting said local carrier signal to obtain a substantially 90° phase relationship with quadrature modulation components contained in said intermediate frequency signal; and

means for phase demodulating said quadrature components using said local carrier.

21. The receiving apparatus of claim 20 wherein said means for generating said local carrier signal comprises:

means for gating said intermediate frequency signal during an interval when said intermediate frequency signal is known to contain only in-phase components; and,

a phase locked loop connected to receive a signal from said means for gating, said phase locked loop including a voltage controlled oscillator becomes phase locked during said interval with a component of said intermediate frequency signal.

22. The receiving apparatus of claim 20 wherein said means for phase shifting comprises:

means for dividing said local carrier signal into first and second quadrature related components;

first and second modulators for receiving said first and second quadrature related components and controlling the amplitude of said components;

means for combining said amplitude controlled quadrature related components;

first and second phase detectors connected to receive said combined related components and said intermediate frequency signal;

first and second sampling means connected to each of said phase detectors for sampling and holding a voltage from said phase detector representing the phase difference between said intermediate frequency signal and said third and fourth components, and applying first and second control voltages to said first and second multipliers for maintaining said second and third quadrature components in a predetermined phase relationship with said intermediate frequency signal.

23. The receiving apparatus of claim 22, wherein said first and second sampling means sample said phase detector output at a time when said received carrier has a known phase.

24. The receiving apparatus of claim 23 wherein said time of sampling occurs during a blanking interval of said standard video signal.

25. A method for transmitting an augmentation video signal for increasing the width and resolution of a standard video signal comprising:

generating in-phase and quadrature phase components of a carrier signal of a television channel;

modulating said in-phase component of said carrier signal with a standard NTSC video signal;

modulating said quadrature component of said carrier signal with said augmentation video signal, whereby upper and lower sideband components of said quadrature component are produced;

combining at least one of said quadrature components containing said augmentation video signal with said in-phase modulation components, whereby said modulated carrier signal is produced having at least one quadrature component containing said augmentation signal; and,

alternating the phase of said combined quadrature components 180° on an alternate periodic basis, whereby the effects of a DC component in said augmentation signal on said carrier signal phase are reduced.

26. The method of claim 25 further comprising suppressing said quadrature carrier component as well as a sideband component produced by said augmentation signal.

27. The method of claim 26 wherein said sideband is suppressed using a filter having a Nyquist response.

28. The method of claim 12 wherein said filter has an amplitude versus frequency response which decreases linearly beginning at a frequency at an upper edge of said lower adjacent channel.

29. The method of claim 25 further comprising:

receiving said modulated carrier signal at a distant receiving location;

converting said modulated carrier signal into an intermediate frequency signal; and

quadrature demodulating said carrier signal producing with a local carrier signal an in phase standard NTSC video signal, and a quadrature phase augmentation signal.

30. The method of claim 29 further comprising:

providing an augmentation signal demodulating carrier signal from said local carrier signal; and,

alternately phase shifting said demodulating carrier on a line by line basis.

31. The method of claim 29 further comprising establishing the phase of said local carrier frequency during a blanking interval of said standard NTSC signal.

# FIG. 1

# FIG. 2A

# FIG. 2B

# FIG. 2C

# FIG. 2D

FIG. 3A

FIG. 3B

fc

fc    fc+1.25 MHZ

FIG. 7

EP 0 311 188 A2

2-VI-PHA 21401

FIG. 4A

FIG. 4B

# FIG. 5

EP 0 311 188 A2

FIG. 6

EP 0 311 188 A2

5-ⅥI-PHA 21401

FIG. 8

(a)

(b)

(c)

(54)

(d)  ÷ 2

(e)  P O

(f)  P 3    $\emptyset+$    $\emptyset-$

(g)  P I    L-3

(h)  P 2

EP 0 311 188 A2

6-Ⅵ-PHA 21401